# EUROPÄISCHE PATENTSCHRIFT

(11) **EP 0 640 763 B1**
(45) Veröffentlichungstag und Bekanntmachung des Hinweises auf die Patenterteilung: **02.01.1997**
(21) Anmeldenummer: 94111582.6
(22) Anmeldetag: 25.07.1994
(51) Int. Cl.: F02P 19/02, G05B 9/02

(54) **Verfahren zur Überwachung wenigstens eines elektrischen Verbrauchers**
Method for monitoring at least one electrical load
Procédé de surveillance d'au moins une charge électrique

(30) Priorität: 26.08.1993 DE 4328719
(43) Veröffentlichungstag der Anmeldung: 01.03.1995
(73) Patentinhaber: ROBERT BOSCH GMBH, 70442 Stuttgart (DE)
(72) Erfinder: Locher, Johannes, Ing. (grad), D-70378 Stuttgart (DE); Bauer, Dr. Hans-Peter, Dipl.-Phys., D-71254 Ditzingen (DE); Neumeister, Jochen, D-70469 Stuttgart (DE)

(56) Entgegenhaltungen:
- PATENT ABSTRACTS OF JAPAN vol. 8, no. 108 (M-297) (1545) 19. Mai 1984 & JP-A-59 018 276 (HINO JIDOSHA KOGYO) 30. Januar 1984
- PATENT ABSTRACTS OF JAPAN vol. 8, no. 92 (P-271) 27. April 1984 & JP-A-59 007 273 (NIPPON DENSO K.K.) 14. Januar 1984
- PATENT ABSTRACTS OF JAPAN vol. 17, no. 480 (E-1425) 31. August 1993 & JP-A-51 021 147 (FUJI ELECTRIC CO) 18. Mai 1993
- PATENT ABSTRACTS OF JAPAN vol. 10, no. 216 (M-2272) 29. Juli 1986 & JP-A-61 053 462 (NIPPON DENSO K.K.) 17. März 1986
- PATENT ABSTRACTS OF JAPAN vol. 6, no. 89 (M-132) 27. Mai 1982 & JP-A-57 026 275 (NIPPON DENSO) 12. Februar 1982
- PATENT ABSTRACTS OF JAPAN vol. 8, no. 253 (M-339) (1690) 20. November 1984 & JP-A-59 128 981 (FUJITSU TEN K.K.) 25. Juli 1984

## Beschreibung

### Stand der Technik

Die Erfindung betrifft ein Verfahren und eine Vorrichtung zur Überwachung wenigstens eines elektrischen Verbrauchers gemäß den Oberbegriffen der unabhängigen Ansprüche.

Ein solches Verfahren und eine solche Vorrichtung zur Überwachung wenigstens eines elektrischen Verbrauchers ist aus der JP-A-59 18 276 bekannt. Dieses Dokument beschreibt ein Verfahren und eine Vorrichtung zur Überwachung von Glühkerzen in Kraftfahrzeugen. Der durch die Glühkerzen fließende Strom wird erfaßt. Erreicht der Strom innerhalb eines Zeitfensters nicht einen erwarteten Wert, so erkennt die Einrichtung auf Fehler.

Dieses Zeitfenster, (T1, T2) muß sehr groß gewählt werden, da der Strom, der durch die Glühkerzen fließt, sehr starken Schwankungen unterworfen ist und von verschiedenen Einflußgrößen abhängt. Aufgrund der Größe des Zeitfensters können Fehler die zu kleinen Abweichungen nicht erkannt werden. Mit dieser Einrichtung werden lediglich Fehler erkannt, bei denen sich der Strom um große Werte ändert.

Die JP-A-59 07 273 zeigt ein Verfahren und eine Vorrichtung zur Überwachung von Glühkerzen. Dort wird die an den Glühkerzen abfallende Spannung mit einem Vergleichswert VC verglichen. Die Messung erfolgt nach einer bestimmten Zeit T1 nach dem Bestromen der Glühkerze. Zur Fehlerüberwachung wird die Spannung an den Glühkerzen überwacht. Da diese Spannung stark von der Batteriespannung abweicht, wird diese bei Bildung des Vergleichswertes VC berücksichtigt. Weicht die Spannung an der Glühkerze stark von dem Vergleichswert VC ab, so erkennt die Einrichtung auf Fehler.

Die JP-A-51 21 147 zeigt ebenfalls ein Verfahren und eine Vorrichtung zur Überwachung eines elektrischen Verbrauchers. Zur Überwachung des Verbrauchers wird der Stromverlauf über der Zeit differenziert. Erkennt der Differenzierer einen starken Abfall des Stroms, so erkennt die Einrichtung einen Defekt eines Heizelements.

Die JP-A-61 53 462 zeigt eine Einrichtung bei der beim ersten Einschalten der Glühkerzen der Widerstand der Glühkerzen gemessen und abgespeichert wird. Im laufenden Betrieb wird der Wert der Widerstände mit diesem abgespeicherten Wert verglichen. Da der Widerstand der Glühkerzen von verschiedenen Parametern stark abhängt, ist mit dieser Vorgehensweise nur eine unsichere Fehlererkennung möglich.

Ferner ist aus der DE-OS 37 20 683 ein Verfahren und ein Vorrichtung zur Überwachung eines elektrischen Verbrauchers bekannt. Dort wird ein Verfahren und eine Vorrichtung beschrieben, bei dem jedem Verbraucher ein Schaltmittel zugeordnet ist. Durch Auswerten des durch die Verbraucher fließenden Stromes kann ein defekter Verbraucher erkannt werden. Hierzu ist unter anderem vorgesehen, daß anhand des Stromanstiegs beim Einschalten eines Verbrauchers überprüft wird, ob ein solcher Stromanstieg erfolgt. Ist dies nicht der Fall, so wird von einem Defekt des Verbrauchers ausgegangen. Bei der Vorrichtung und dem Verfahren gemäß dieser Entgegenhaltung ist es erforderlich, daß jedem Verbraucher ein Schaltmittel zugeordnet ist. Eine solche Art der Ansteuerung ist sehr aufwendig und teuer.

### Aufgabe der Erfindung

Der Erfindung liegt die Aufgabe Zugrunde, ein möglichst einfaches und kostengünstiges Verfahren und Vorrichtung zur Überwachung von elektrischen Verbrauchern zu schaffen, mit der defekte elektrische Verbraucher sicher erkannt werden können. Diese Aufgabe wird durch die in den unabhängigen Ansprüchen gekennzeichneten Merkmale gelöst.

### Vorteile der Erfindung

Mittels der erfindungsgemäßen Vorgehensweise wird ein sicher arbeitendes mit geringem Aufwand realisierbares Verfahren und Vorrichtung zur Überwachung von Glühkerzen realisiert.

### Zeichnung

Die Erfindung wird nachstehend anhand der in der Zeichnung dargestellten Ausführungsformen erläutert. Es zeigen Figur 1 ein Blockdiagramm der erfindungsgemäßen Einrichtung. Figur 2 ein Zeitdiagramm, Figur 3 ein Flußdiagramm zur Verdeutlichung einer ersten Ausgestaltung, und Figur 4 ein Flußdiagramm zur Verdeutlichung einer weiteren Ausgestaltung der erfindungsgemäßen Vorgesehensweise.

### Beschreibung der Ausführungsbeispiele

Im folgenden wird das Verfahren und die Vorrichtung zur Überwachung von elektrischen Verbrauchern am Beispiel von Heizelementen in Kraftfahrzeugen, insbesondere von Glühkerzen in Dieselbrennkraftmaschinen beschrieben. Die erfindungsgemäße Vorgehensweise kann aber auch bei anderen elektrischen Verbrauchern in Kraftfahrzeugen eingesetzt werden. So werden entsprechende Heizelemente zur Beheizung von Lambda-Sonden eingesetzt.

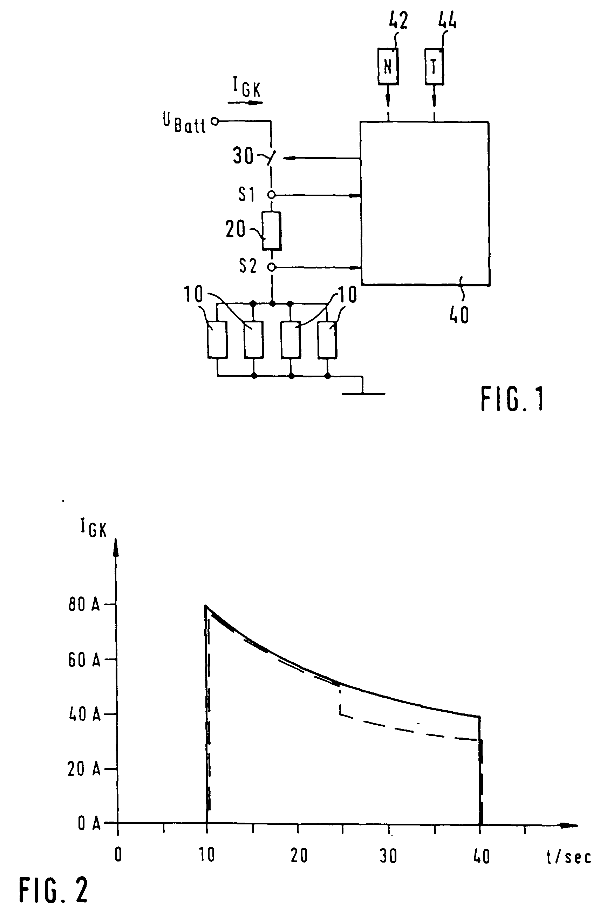

In Figur 1 ist eine solche Einrichtung zur Steuerung bzw. zur Regelung von Glühkerzen einer Dieselbrennkraftmaschine dargestellt. Die Schaltung besteht im wesentlichen aus einer Reihenschaltung von wenigstens zwei parallelgeschalteten Glühkerzen 10, einem Strommeßmittel 20, einem Schaltmittel 30. Diese Elemente sind in Reihe zwischen der Batteriespannung U_{Batt} und Masse geschaltet. Üblicherweise ist pro Zylinder der Brennkraftmaschine eine Glühkerze vorgesehen.

Eine elektronische Steuereinheit 40 beaufschlagt das Schaltmittel 30 mit entsprechenden Ansteuersignalen. Des weiteren verarbeitet die Steuereinrichtung, die an den Punkten S1 und S2 anliegenden Potentiale US1 und US2. Des weiteren verarbeitet die Steuereinrichtung 40 Signale verschiedener Sensoren 42 und 44 die z.B. Temperatur- und Drehzahlwerte erfassen. Es ist aber auch vorstellbar, daß die Steuereinrichtung 40 ein entsprechendes Signal von einem Motorsteuergerät erhält. Ausgehend von diesen Signalen berechnet die Steuereinrichtung 40 Steuersignale zur Beaufschlagung des Schaltmittels 30.

Bei dem Schaltmittel 30 handelt es sich vorzugsweise um ein Relais, es können aber auch entsprechende Leistungsschalter insbesondere Transistoren eingesetzt werden. Bei dem Strommeßmittel 20 handelt es sich vorzugsweise um einen niederohmigen Widerstand. Der Spannungsabfall zwischen den Punkten S1 und S2 entspricht dann dem durch diese Anordnung fließenden Glühkerzenstrom I_{GK}.

Es kann vorgesehen sein, daß die Steuereinrichtung 40 den durch die Glühkerzen fließenden Glühkerzenstrom I_{GK} erfaßt und durch entsprechendes Ansteuern des Schaltmittels 30 auf vorgegebene Werte einregelt.

Erfindungsgemäß überwacht die Steuereinrichtung 40 die Glühkerzen auf ihre korrekte Funktion. Üblicherweise treten als Defekte eine Unterbrechung des Stromkreises in einer der Glühkerzen 10 auf. Diese Unterbrechungen werden erfindungsgemäß ausgehend von dem Stromverlauf des Glühkerzenstroms I_{GK} erkannt.

Bei der dargestellten Ausführungsform werden alle Glühkerzen gemeinsam angesteuert. Dies bedeutet, daß das Strommeßmittel 20 den Gesamtstrom erfaßt, dies bedeutet es wird die Summe über alle Ströme durch die einzelnen Glühkerzen erfaßt, und daß auch nur dieser Gesamtstrom zur Fehlererkennung zur Verfügung steht.

In Figur 2 ist der Verlauf des Gesamtstroms I_{GK} durch die Glühkerzen über der Zeit t aufgetragen. Werden z.B. nach 10 Sekunden die Glühkerzen durch Schließen des Schaltmittels 30 mit Spannung beaufschlagt, so steigt der Strom sehr schnell auf seinen maximalen Wert in diesem Beispiel ca. 80 A an. Da durch die Aufheizung der Glühkerzen deren ohmscher Widerstand ansteigt, fällt der Strom über die Zeit auf einen niederen Wert hier z.B. 40 A ab.

Der Zeitraum über den der Strom abfällt hängt im wesentlichen von verschiedenen Parametern der Glühkerze ab. Nach einiger Zeit wird das Schaltmittel 30 geöffnet und die Spannung an der Glühkerze und damit auch der Strom fällt auf Null ab. In dem dargestellten Ausführungsbeispiel erfolgt die Abschaltung nach 40 Sekunden. Diese Zeitspanne liegt üblicherweise abhängig von verschiedenen Einflußgrößen zwischen wenigen Sekunden bis ca. einigen Minuten. Dieser Stromverlauf ist in Figur 2 mit einer durchgezogenen Linie eingezeichnet.

Tritt nun während des Glühvorganges ein Defekt in einer der Glühkerzen auf, so fällt der Gesamtstrom zum Zeitpunkt des Defektes plötzlich ab. In dem dargestellten Ausführungsbeispiel erfolgt der Defekt nach 25 Sekunden. Dieser Stromverlauf ist in Figur 2 mit einer unterbrochenen Linie eingezeichnet.

Problematisch ist nun, daß die Absolutwerte des Stromes von Glühkerze zu Glühkerze bzw. von Glühvorgang zu Glühvorgang sehr unterschiedlich sind. Erfindungsgemäß wurde erkannt, daß der Verlauf des Gesamtstroms eine Größe darstellt, die zur Detektion eines Glühkerzenausfalles geeignet ist. Die Steuereinrichtung 40 überprüft, ob während der Ansteuerphase ein plötzlicher Stromabfall, wie er in Figur 2 gestrichelt eingezeichnet ist, auftritt. Erkennt sie einen solchen schnellen Abfall, so ist von einem Defekt einer der Glühkerzen auszugehen.

Der Gesamtstrom I_{GK} durch die Glühkerzen hängt von verschiedenen Parametern wie insbesondere der Versorgungsspannung (Batteriespannung U_{Batt}), der Glühkerzentemperatur, der Alterung der Glühkerzen und der Streuung der Kerzeneigenschaften ab. So ist z.B. die Kerzentemperatur abhängig von der Motordrehzahl, der Zylinderfüllung und der Motortemperatur bzw. der Umgebungstemperatur.

Bei einer ersten Ausgestaltung der Erfindung ist vorgesehen, daß durch Auswertung des Gesamtstroms als Funktion der Zeit Defekte im Bereich der Glühkerzen erkannt werden. Hierzu vergleicht die Steuereinrichtung 40 den aktuellen Stromwert mit abgespeicherten Werten. Als Vergleichswerte dienen Stromwerte desselben Heiz- oder Glühvorganges, des vorhergehenden Heiz- oder Glühvorganges oder geeignete, vorgebbare Werte.

Bei diesem Verfahren werden die Meßwerte des Gesamtstroms und der weiteren Meßgrößen, die Einfluß auf den Gesamtstrom besitzen, abgespeichert. Durch Korrektur des Meßwerts des Gesamtstroms mit den entsprechenden Einflußparametern werden die Daten der Glühvorgänge so aufbereitet, daß ein Vergleich erfolgen kann. Die gemessenen Werte werden ausgehend von den Parametern, die den Strom durch die Glühkerzen beeinflussen korrigiert. Mit diesen korrigierten Werten, werden dann die Stromwerte bei dem folgenden Glühvorgang verglichen.

Sind die Daten wegen der unterschiedlichen Glühvorgänge nicht auswertbar, so erfolgt ein Vergleich mit abgelegten Vergleichswerten. Diese Vergleichswerte sind vorzugsweise abhängig von wenigstens einem der Betriebsparameter Batteriespannung, Temperatur des Verbrauchers, Zeitpunkt der Messung bzw. Stand eines Merkers, Alterung der Verbraucher und Streuung abgespeichert.

Der Vorteil dieses Verfahrens besteht darin, daß eine Alterung der Glühkerzen und der die Messung beeinflussenden Bauteile kompensierbar ist, da nur der Anteil der Alterung zwischen den Zeitpunkten der jeweiligen Messung, die zum Vergleich herangezogen werden, in die Auswertung eingeht. Die Werte des Gesamtstroms und der Einflußparameter werden gemessen und gespeichert. Wegen der Datenmenge wird diese Einrichtung vorzugsweise mittels eines Microprozessors realisiert.

Ein Defekt wird hier erkannt, wenn zu einem vorgegebenen Zeitpunkt der Strom durch die Glühkerzen von einem erwarteten Wert abweicht. Insbesondere wird der Fehler erkannt, wenn der Wert des Glühkerzenstroms um einen vorgegebenen Schwellwert kleiner ist, als der Glühkerzenstrom bei der letzten vergleichbaren Messung des Glühkerzenstroms eines vorhergehenden Glühvorgangs.

Vorzugsweise werden die Werte eines Glühvorganges zum Vergleich ausgewählt, bei dem gleiche oder ähnliche Paramter vorlagen. Bei abweichenden Parametern ist der Vergleichswert entsprechend zu korrigieren.

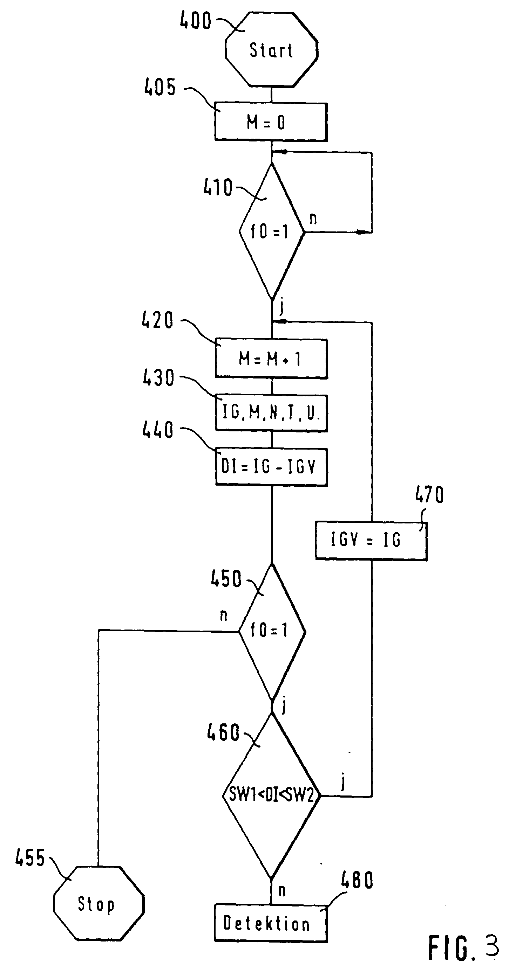

Eine mögliche Realisierung dieser Vorgehensweise ist in Figur 3 dargestellt. Nach Start der Fehlererkennung wird im Schritt 405 ein Merker M auf Null gesetzt. Anschließend wird in der Abfrage 410 überprüft, ob das Schaltmittel geschlossen ist, bzw. ob die Glühkerzen mit Spannung bzw. mit Strom beaufschlagt werden. Ist dies nicht der Fall, so wird dies in der Abfrage 410 wiederholt.

Durch Verwendung eines Zählers für den Merker M und einer Abfrage auf einen Zählwert, können auch mehrere Punkte im Kennfeld überprüft werden.

Erkennt die Abfrage 410, daß das Schaltmittel geschlossen ist, wird im Schritt 420 der Merker M incrementiert. Anschließend werden im Schritt 430 der aktuelle Stromwert IG und die Einflußparameter erfaßt. Die wesentlichsten Einflußparameter sind die Batteriespannung, der Wert des Merkers M, die Drehzahl N der Brennkraftmaschine, ein Temperaturwert T wie beispielsweise die Umgebungstemperatur oder die Kühlwassertemperatur. Im Schritt 440 wird die Differenz DI zwischen dem aktuellen Stromwert IG und einem geeigneten Vergleichswert IGV berechnet. Vorzugsweise wird der Vergleichswert IGV abhängig von den Einflußparametern aus Kennfeldern ausgelesen.

In der folgenden Abfrage 450 wird der Zustand des Schaltmittels erneut überprüft, ist es geöffnet, so ist der Glühvorgang beendet und die Überwachung endet im Schritt 455. Erkennt die Abfrage 450, daß das Schaltmittel geschlossen ist, so folgt die Abfrage 460. Die Abfrage 460 überprüft, ob diese Differenz DI innerhalb eines zulässigen Bereichs liegt. Dies heißt die Abfrage 460 überprüft beispielsweise, ob die Differenz größer als ein erster Schwellwert SW1 und kleiner als ein zweiter Schwellwert SW2 ist.

Ist dies nicht der Fall, so wird in einem Schritt 480 ein Fehlersignal bereitgestellt. Andernfalls wird im Schritt 470 der Wert IG als ein neuer Vergleichswert IGV gesetzt und mit den Einflußparametern abgespeichert. Anschließend setzt das Programm mit dem Schritt 420 fort. Die Schwellwerte SW1 und SW2 hängen vorzugsweise von den Parametern ab, die den Strom durch die Glühkerzen beeinflussen.

Bei einer weiteren Ausgestaltung ist vorgesehen, daß ausgehend von dem aktuellen Stromwert ein Stromwert extrapoliert wird. Dieser prognostizierte Stromwert ergibt sich durch Auswertung verschiedener Einflußparameter. Die Steuereinrichtung 40 vergleicht dann den aktuellen Stromwert mit prognostizierten Stromwerten. Die prognostizierten Werte werden ausgehend von den Stromwerten desselben Glühvorganges oder des vorhergehenden Glühvorganges bestimmt.

Bei diesem Verfahren werden die Meßwerte des Gesamtstroms und der weiteren Meßgrößen, die Einfluß auf den Gesamtstrom besitzen, abgespeichert. Ausgehend von diesen Größen berechnet die Einrichtung einen zu erwartenden Stromwert. Erreicht unter Berücksichtigung vorgegebener Toleranzen bei der nächsten Messung der Strom nicht diesen erwarteten Strom, so wird von einem Defekt ausgegangen.

Ein Defekt wird hier erkannt, wenn zu einem vorgegebenen Zeitpunkt der Strom durch die Glühkerzen von dem prognostizierten Stromwert abweicht.

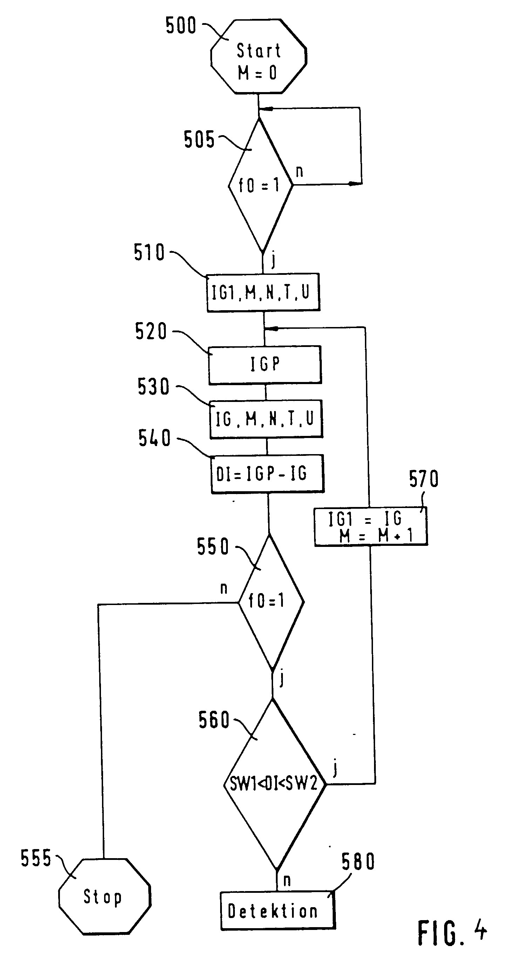

Eine mögliche Realisierung dieser Vorgehensweise ist in Figur 4 dargestellt. Beim Start der Fehlererkennung im Schritt 500 wird ein Merker M auf Null gesetzt. Eine anschließende ersten Abfrage 505 überprüft, ob die Glühkerzen mit Spannung bzw. mit Strom beaufschlagt werden. Ist dies nicht der Fall, so wird die Abfrage 505 wiederholt.

Anschließend wird im Schritt 510 ein Ausgangswert für den Stromwert IG1 sowie verschiedene Einflußgrößen erfaßt. Im Schritt 520 wird dann ausgehend von dem Ausgangswert IG1 und den verschiedenen Einflußgrößen der prognostizierte Stromwert IGP bestimmt. Besonders vorteilhaft ist es, wenn hierzu eine Fuzzy-Logik eingesetzt wird.

Anschließend werden im Schritt 530 der aktuelle Stromwert IG und die Einflußparameter erfaßt. Die wesentlichsten Einflußparameter sind die Batteriespannung, die Drehzahl N der Brennkraftmaschine, ein Temperaturwert T wie beispielsweise die Umgebungstemperatur oder die Kühlwassertemperatur und der Wert des Merkers M. Im Schritt 540 wird die Differenz zwischen dem aktuellen Stromwert IG, der im vorgehenden Schritt 530 gemessen wurde, und dem prognostizierten Stromwert IGP berechnet.

In der folgenden Abfrage 550 wird der Zustand des Schaltmittels erneut überprüft, ist es geöffnet, so ist der Glühvorgang beendet und die Überwachung endet im Schritt 555. Erkennt die Abfrage 550, daß das Schaltmittel geschlossen ist, so folgt die Abfrage 560.

Die Abfrage 560 überprüft, ob die Differenz DI innerhalb eines zulässigen Bereichs liegt. Ist dies nicht der Fall, das heißt die Abweichung des gemessenen Stromwerts von dem prognostizierten Stromwert ist zu groß, so wird in einem Schritt 580 ein Fehlersignal bereitgestellt. Anderenfalls wird im Schritt 560 der Ausgangswert IG1 mit dem aktuellen Wert IG überschrieben, zusammen mit den Einflußparametern abgespeichert und der Merker incrementiert. Anschließend erfolgt im Schritt 520 die erneute Berechnung des prognostizierten Wertes.

Üblicherweise ist vorgesehen, daß das Fehlersignal von der Steuereinheit direkt verarbeitet oder der Motorsteuerung übermittelt wird. Vorzugsweise wird ein erkannter Fehler dem Fahrer über geeignete Mittel, wie insbesondere eine Kontrolleuchte oder ein Anzeigedisplay angezeigt.

Vorzugsweise wird der Gesamtstrom durch alle Glühkerzen überwacht. Dieses bietet den Vorteil, daß mittels einer Überwachungseinrichtung ein Defekt in einer beliebigen Glühkerze sicher erkannt werden kann.

Diese Verfahren können auch im sogenannten Passivbetrieb eingesetzt werden. Beim Passivbetrieb wird anstatt der Versorgungsspannung eine Prüfspannung oder ein Prüfstrom an die Glühkerzen angelegt.

Durch die Auswertung des Gesamtstroms durch alle Glühkerzen kann ein Ausfall einer Glühkerze sicher erkannt werden. Bereits der Ausfall einer Glühkerze wirkt sich negativ auf die Abgasemissionen aus. Aus diesem Grund ist es wichtig, daß ein Ausfall einer der Glühkerzen sofort erkannt wird, insbesondere mit Blick auf die hohen Anforderungen an die Abgasemissionen und die Betriebssicherheit in den USA.

## Patentansprüche

1. Verfahren zur Überwachung wenigstens eines elektrischen Verbrauchers, insbesondere von Heizelementen in Kraftfahrzeugen, wobei bei einem Heizvorgang, der durch den bzw. die Verbraucher fließende Strom erfaßt und durch Auswerten des Stroms ein Defekt wenigstens eines Verbrauchers erkannt wird, dadurch gekennzeichnet, daß ein Defekt erkannt wird, wenn der Strom zu einem vorgebbaren Zeitpunkt von einem erwarteten Wert abweicht, wobei der erwartete Wert ausgehend von einem gemessenen Stromwert und wenigstens einer weiteren Meßgröße, die Einfluß auf den Stromwert besitzt, ermittelt wird.

2. Verfahren nach Anspruch 1, dadurch gekennzeichnet, daß der erwartete Wert ausgehend von einem Stromwert und abhängig von wenigstens einer der folgenden Einflußgrößen Betriebsspannung, Temperatur des Verbrauchers, Alterung des Verbrauchers und Streuung ermittelt wird.

3. Verfahren nach einem der vorhergehenden Ansprüche, dadurch gekennzeichnet, daß der erwartete Wert ausgehend von einem Stromwert eines vorhergehenden Heizvorgangs ermittelt wird.

4. Verfahren nach einem der vorhergehenden Ansprüche, dadurch gekennzeichnet, daß der erwartete Wert ausgehend von einem Stromwert bei einem zurückliegenden Zeitpunkt des Heizvorgang ermittelt wird.

5. Verfahren nach einem der vorhergehenden Ansprüche, dadurch gekennzeichnet, daß der Gesamtstrom durch alle Verbraucher ausgewertet wird.

6. Vorrichtung zur Überwachung wenigstens eines elektrischen Verbrauchers, insbesondere von Heizelementen in Kraftfahrzeugen, wobei bei einem Heizvorgang, der durch den bzw. die Verbraucher fließende Strom erfaßt und durch Auswerten des Stroms ein Defekt wenigstens eines Verbrauchers erkannt wird, dadurch gekennzeichnet, daß Mittel vorgesehen sind, die einen Defekt erkennen, wenn der Strom zu einem vorgebbaren Zeitpunkt von einem erwarteten Wert abweicht, wobei der erwartete Wert ausgehend von einem gemessenen Stromwert und wenigstens einer weiteren Meßgröße, die Einfluß auf den Stromwert besitzt, ermittelt wird.

7. Vorrichtung nach Anspruch 6, dadurch gekennzeichnet, daß es sich bei den Heizelementen um Glühkerzen handelt.

## Claims

1. Method for monitoring at least one electrical load, in particular heating elements in motor vehicles, the current flowing through the load or loads being sensed during a heating process and a defect in at least one load being detected by evaluating the current, characterized in that a defect is detected if the current deviates from an expected value at a prescribable time, the expected value being determined on the basis of a measured current value and at least one further measured variable which influences the current value.

2. Method according to Claim 1, characterized in that the expected value is determined on the basis of a current value and as a function of at least one of the following influencing variables: operating voltage, temperature of the load, ageing of the load and tolerances.

3. Method according to one of the preceding claims, characterized in that the expected value is determined on the basis of a current value of a preceding heating process.

4. Method according to one of the preceding claims, characterized in that the expected value is determined on the basis of a current value at a previous time during the heating process.

5. Method according to one of the preceding claims, characterized in that the overall current through all the loads is evaluated.

6. Device for monitoring at least one electrical load, in particular heating elements in motor vehicles, the current flowing through the load or loads being sensed during a heating process and a defect in at least one load being detected by evaluating the current, characterized in that means are provided which detect a defect if the current deviates from an expected value at a prescribable time, the expected value being determined on the basis of a measured current value and at least one further measured variable which influences the current value.

7. Device according to Claim 6, characterized in that the heating elements are glow plugs.

## Revendications

1. Procédé pour surveiller au moins une charge électrique en particulier d'éléments de chauffage dans des véhicules à moteur, procédé dans lequel, lors d'un processus de chauffage, l'intensité qui passe à travers la ou les charges est détectée et l'on identifie par exploitation de l'intensité un défaut d'au moins l'une des charges,
procédé caractérisé en ce que
l'on détecte un défaut, quand l'intensité s'écarte à un instant que l'on peut prédéfinir d'une valeur attendue, la valeur attendue étant déterminée en partant d'une valeur d'intensité mesurée et d'au moins une autre grandeur de mesure, qui possède une influence sur la valeur de l'intensité.

2. Procédé selon la revendication 1
caractérisé en ce que
la valeur attendue est déterminée en partant d'une valeur d'intensité et en fonction d'au moins l'une des grandeurs d'influence suivantes : la tension de fonctionnement, la température de la charge, le vieillissement de la charge et la dispersion.

3. Procédé selon l'une des revendications précédentes,
caractérisé en ce que
la valeur attendue est déterminée en partant d'une valeur d'intensité d'un processus de chauffage précédent.

4. Procédé selon l'une des revendications précédentes,
caractérisé en ce que
la valeur attendue est déterminée en partant d'une valeur d'intensité lors d'un instant antérieur du processus de chauffage.

5. Procédé selon l'une des revendications précédentes,
caractérisé en ce que
l'on exploite l'intensité totale qui passe à travers toutes les charges.

6. Dispositif de surveillance d'au moins une charge électrique, en particulier d'éléments de chauffage dans des véhicules à moteur, dispositif dans lequel lors d'un processus de chauffage on détecte un défaut d'au moins une charge par l'intensité qui passe dans les charges et par l'exploitation de cette intensité, dispositif
caractérisé en ce que
des moyens sont prévus, qui détectent un défaut quand l'intensité s'écarte à un instant que l'on peut prédéfinir d'une valeur attendue, la valeur attendue étant déterminée en partant d'une valeur d'intensité mesurée et d'au moins une autre grandeur de mesure qui possède une influence sur la valeur de l'intensité.

7. Dispositif selon la revendication 6,
caractérisé en ce qu'
il s'agit dans le cas des éléments chauffants de bougies à incandescence de préchauffage.
